(19) **Europäisches Patentamt**
**European Patent Office**
**Office européen des brevets**

(11) **EP 3 896 905 B1**

(12) **EUROPEAN PATENT SPECIFICATION**

(45) Date of publication and mention
of the grant of the patent:
**26.02.2025  Bulletin 2025/09**

(51) International Patent Classification (IPC):
***H04L 41/142*** *(2022.01)*    *H04W 24/08* *(2009.01)*

(21) Application number: **20170106.7**

(52) Cooperative Patent Classification (CPC):
**H04L 41/142;** H04W 24/08

(22) Date of filing: **17.04.2020**

(54) **SLEEPING CELL DETECTION**

ERKENNUNG VON SCHLAFZELLEN

DÉTECTION DE CELLULE EN SOMMEIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.10.2021  Bulletin 2021/42**

(73) Proprietor: **Nokia Solutions and Networks Oy
02610 Espoo (FI)**

(72) Inventors:
• **PINA, Alessia**
  **20900 Monza (IT)**
• **TIOZZO, Annagiulia**
  **27029 Vigevano (IT)**
• **CORBETTA, Giuliano**
  **20133 Milano (IT)**
• **GEMELLI, Riccardo**
  **20019 Settimo Milanese (IT)**

(74) Representative: **Whiting, Gary et al
Venner Shipley LLP
5 Stirling House**

**Stirling Road
The Surrey Research Park
Guildford GU2 7RF (GB)**

(56) References cited:
**EP-A1- 2 784 734**          **WO-A1-2020/038544**
**WO-A1-2020/064094**     **US-A1- 2019 087 239**
**US-A1- 2019 245 754**

• **MASOOD USAMA ET AL: "Deep Learning Based
  Detection of Sleeping Cells in Next Generation
  Cellular Networks", 2018 IEEE GLOBAL
  COMMUNICATIONS CONFERENCE
  (GLOBECOM), IEEE, 9 December 2018
  (2018-12-09), pages 206 - 212, XP033519851, DOI:
  10.1109/GLOCOM.2018.8647689**
• **JESSICA MOYSEN ET AL: "From 4G to 5G: Self-
  organized Network Management meets Machine
  Learning", ARXIV.ORG, CORNELL UNIVERSITY
  LIBRARY, 201 OLIN LIBRARY CORNELL
  UNIVERSITY ITHACA, NY 14853, 28 July 2017
  (2017-07-28), XP081306600**

## Description

## Field

The present specification relates to the detection of sleeping cells in a communication system.

## Background

Sleeping cells are a type of cell outage in a mobile communication system resulting in the mobile service being unavailable for subscribers, but in which the cell appears operable to a network. Although developments have been made, there remains a need for further developments in this field.

WO2020/o64094 discloses a method for predicting a state of a cell in a radio access network. The method comprising obtaining information of the cell, determining one or more sets of conditions based on the information and predicting that the cell will enter a sleeping state when at least one set of the one or more sets of conditions is fulfilled. The method further comprises outputting an action to prevent the cell from entering the sleeping state based on the probability and a number of wireless devices currently connected to the cell.

## Summary

In a first aspect, this specification describes an apparatus comprising means for performing: obtaining initial training labels for first performance management data of a mobile communication network, wherein the initial training labels are generated by a first classification model to identify potentially sleeping cells of the mobile communication network; training a machine-learning model based on the initial training labels, wherein the model is configured to identify potentially sleeping cells within the mobile communication network; identifying potentially sleeping cells using the trained machine-learning model based on second performance management data of the mobile communication network; receiving feedback based on an impact of corrective action taken based on the identification, by the machine-learning model, of said potentially sleeping cells; updating said training labels based on said received feedback (e.g. updating said labels with ground truth labels); and retraining the machine-learning model based on the updated training labels.

The means for obtaining initial training labels may be further configured to perform: receiving said first performance management data from the mobile communication network; and generating said initial training labels from the received first performance management data using the first classification model.

In some example embodiments, the first classification model is configured to generate said initial training labels by identifying changes in statistical association between pairs of performance management data points that are suggestive of potentially sleeping cells. The statistical association may be a correlation. The statistical association/correlation may highlight windows containing the most relevant changes.

The first classification model may be configured to filter performance management data.

The initial training labels may include time window samples. Label of corresponding samples from different time windows are may be mapped to the same inputs of a neural network of said machine learning model.

In some example embodiments, the retraining of the machine-learning model is periodic.

In some example embodiments, the corrective action comprises restarting a cell of the mobile communication network identified as a potentially sleeping cell.

The means may be further configured to perform: determining whether a cell identified by said machine-learning model as a potentially sleeping cell was a sleeping cell based on the impact of said corrective action, wherein said feedback is based on said determination. The means for determining whether a cell identified by said model as a potentially sleeping cell was a sleeping cell may comprise a manual check. Alternatively, or in addition, the means for determining whether a cell identified by said model as a potentially sleeping cell was a sleeping cell may comprise an automated check using network management tools.

The machine-learning model may be organised according to a multiple interconnected hierarchical structure. For example, each layer of the hierarchical structure of the machine-learning model may be independently trainable.

The said means may comprise: at least one processor; and at least one memory including computer program code, the at least one memory and the computer program configured, with the at least one processor, to cause the performance of the apparatus.

In a second aspect, this specification describes a method comprising: obtaining initial training labels for first performance management data of a mobile communication network, wherein the initial training labels are generated by a first classification model to identify potentially sleeping cells of the mobile communication network; training a machine-learning model based on the initial training labels, wherein the model is configured to identify potentially sleeping cells within the mobile communication network; identifying potentially sleeping cells using the trained machine-learning model based on second performance management data of the mobile communication network; receiving feedback based on an impact of corrective action taken based on the identification, by the machine-learning model, of said potentially sleeping cells; updating said training labels based on said received feedback (e.g. updating said labels with ground truth labels); and retraining the machine-learning model based on the updated training labels.

Obtaining initial training labels may comprise:

receiving said first performance management data from the mobile communication network; and generating said initial training labels from the received first performance management data using the first classification model.

The first classification model may be configured to generate said initial training labels by identifying changes in statistical association (e.g. a correlation) between pairs of performance management data points that are suggestive of potentially sleeping cells. The first classification model may be configured to filter performance management data. The initial training labels may include time window samples, wherein labels of corresponding samples from different time windows are mapped to the same inputs of a neural network of said machine learning model.

The retraining of the machine-learning model may be periodic.

The corrective action may comprise restarting a cell of the mobile communication network identified as a potentially sleeping cell.

The method may further comprise: determining whether a cell identified by said machine-learning model as a potentially sleeping cell was a sleeping cell based on the impact of said corrective action. The said feedback may be based on said determination.

Determining whether a cell identified by said model as a potentially sleeping cell was a sleeping cell may comprise a manual check or an automated check using network management tools.

The machine-learning model may be organised according to a multiple interconnected hierarchical structure (e.g. wherein each layer of the hierarchical structure of the machine-learning model is independently trainable).

In a third aspect, this specification describes an apparatus configured to perform (at least) any method as described with reference to the second aspect.

In a fourth aspect, this specification describes computer-readable instructions which, when executed by computing apparatus, cause the computing apparatus to perform (at least) any method as described with reference to the second aspect.

In a fifth aspect, this specification describes a computer program comprising instructions for causing an apparatus to perform at least the following: obtaining initial training labels for first performance management data of a mobile communication network, wherein the initial training labels are generated by a first classification model to identify potentially sleeping cells of the mobile communication network; training a machine-learning model based on the initial training labels, wherein the model is configured to identify potentially sleeping cells within the mobile communication network; identifying potentially sleeping cells using the trained machine-learning model based on second performance management data of the mobile communication network; receiving feedback based on an impact of corrective action taken based on the identification, by the machine-learning model, of said potentially sleeping cells; updating said training labels based on said received feedback (e.g. updating said labels with ground truth labels); and retraining the machine-learning model based on the updated training labels.

In a sixth aspect, this specification describes a computer-readable medium (such as a non-transitory computer-readable medium) comprising program instructions stored thereon for performing (at least) the method of the second aspect.

In a seventh aspect, this specification describes an apparatus comprising: at least one processor; and at least one memory including computer program code which, when executed by the at least one processor, causes the apparatus to perform (at least) the method of the second aspect.

In an eighth aspect, this specification describes an apparatus comprising: means (such as a first classification model, e.g. forming parting of an automatic label generation module) for obtaining initial training labels for first performance management data of a mobile communication network, wherein the initial training labels are generated by a first classification model to identify potentially sleeping cells of the mobile communication network; means (such as a training or retraining module) for training a machine-learning model based on the initial training labels, wherein the model is configured to identify potentially sleeping cells within the mobile communication network; means (such as a (trained) classification module) for identifying potentially sleeping cells using the trained machine-learning model based on second performance management data of the mobile communication network; means (such as a feedback module) for receiving feedback based on an impact of corrective action taken based on the identification, by the machine-learning model, of said potentially sleeping cells; means (such as a ground truth label updating module) for updating said training labels based on said received feedback; and means (such as the training or retraining module) retraining the machine-learning model based on the updated training labels.

**Brief description of the drawings**

Example embodiments will now be described, by way of example only, with reference to the following schematic drawings, in which:

> FIG. 1 is a block diagram of a system in accordance with an example embodiment;
> FIG. 2 is a flow chart showing an algorithm in accordance with an example embodiment;
> FIG. 3 is a block diagram of a system in accordance with an example embodiment;
> FIGS. 4 and 5 are flow charts showing algorithms in accordance with example embodiments;
> FIGS. 6 and 7 are block diagrams of neural networks used in example embodiments;

FIG. 8 is a block diagram of components of a system in accordance with an example embodiment; and FIGS. 9A and 9B show tangible media, respectively a removable non-volatile memory unit and a Compact Disc (CD) storing computer-readable code which when run by a computer perform operations according to example embodiments.

**Detailed description**

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

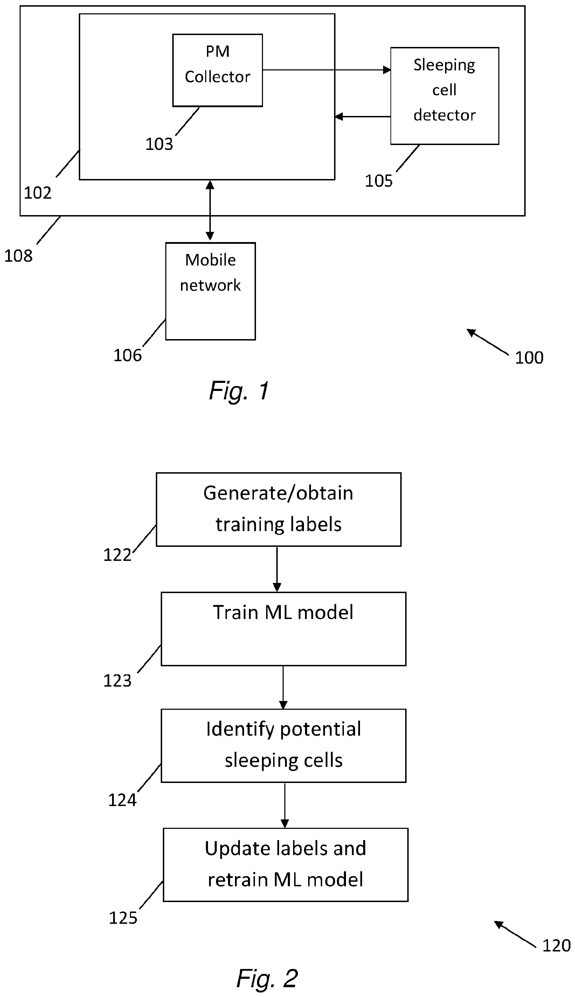

FIG. 1 is a block diagram of a system, indicated generally by the reference numeral 100, in accordance with an example embodiment. The system 100 comprises a network management system (NMS) 102 in two-way communication with a mobile communications network 106, such as an LTE (long term evolution) RAN (radio access network). The NMS 102 includes a performance management (PM) data collector 103 (along with many other modules, which are omitted from FIG. 1 for clarity). The PM data collector 103 provides performance management (PM) data to a sleeping cell detector 105. The NMS 102 and sleeping cell detector 105 may form part of an operator Network Operation Center (NOC) 108.

The sleeping cell detector 105 seeks to identify sleeping cells based on the PM data received from the NMS 102. The PM data may, for example, be available on an hourly basis, but such time granularity for PM collection can be also reduced (e.g. to 15 minutes) or increased (e.g. to daily collection). As noted above, sleeping cells are a kind of cell outage which makes mobile service either unavailable for subscribers or with reduced performance, but in which the cell typically appears to be operable from the network point of view. The cell results provided to the operator (e.g. to the NMS 102) typically appears as if it has no or reduced traffic, as would be the case if most users within the cell were inactive.

The sleeping cell detector 105 provides indications of identified sleeping cells to the NMS 102, such that suitable action can be taken.

FIG. 2 is a flow chart showing an algorithm, indicated generally by the reference numeral 120, in accordance with an example embodiment.

The algorithm 120 starts at operation 122 where initial training labels are obtained. The initial training labels may be generated based on first performance management (PM) data received from a mobile communication network (such as the mobile network 106). As discussed in detail below, the initial training labels are generated by a first classification model (e.g. forming part of the sleeping cell detector 105) that is used to identify potentially sleeping cells of the mobile communication network, for example based on a statistical analysis of the PM data.

At operation 123, a machine-learning model is trained based on the initial training labels generated in operation 122. The model (e.g. implemented by the sleeping cell detector 105) is configured to identify potentially sleeping cells within the mobile communication network 106.

At operation 124, the model trained in operation 123 is used to identify potentially sleeping cells based on further performance management data of the mobile communication network 106.

As discussed in detail below, a determination of the validity of the operation 124 in identifying potentially sleeping cells can be used, in operation 125, in the updating of the training labels and the retraining of the machine-learning model based on the updated training labels. The updating of the machine-learning model may be periodic. Alternatively, or in addition, the updating of the machine-learning model may be triggered by other factors, such as the quality (perceived or measured) of the model.

The algorithm 120 provides a feedback loop that can be used to continuously evolve a set of training labels for using in training the machine-learning model. The initial training labels are generated (in the operation 122), with no ground truth needed, and the training labels are then evolved, as discussed further below, by mixing the training set with new training examples that constitute the ground truth, as derived from a feedback from the network and the operators.

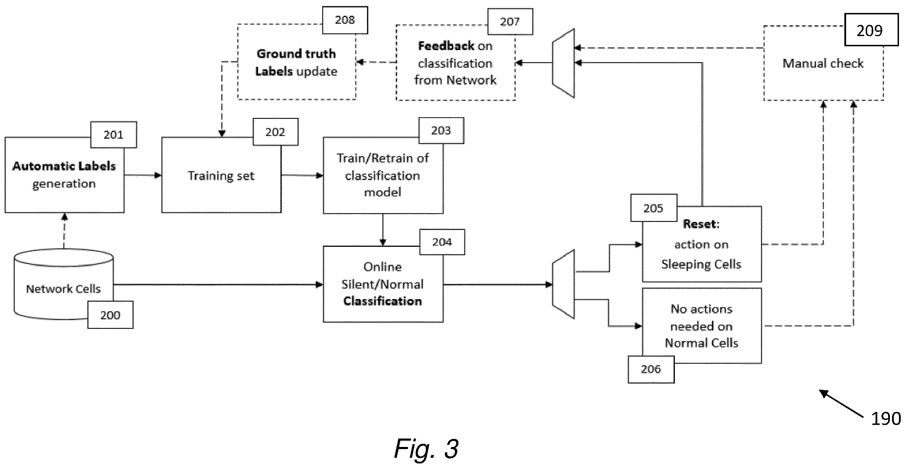

FIG. 3 is a block diagram of a system, indicated generally by the reference numeral 190, in accordance with an example embodiment. The system 190 may be used to implement the algorithm 120 described above.

The system 190 comprises network cells 200, an automatic label generation module 201, training set 202, model training module 203, online classification module 204, reset module 205, no action module 206, feedback module 207, ground truth label update module 208 and manual check module 209.

The automatic label generation module 201 generates initial training labels based on performance management data from the network cells 200 (such as the mobile network 106). The automatic label generation module generates those initial training labels (which identify potentially sleeping cells of the network cells 200) using a first classification model. The automatic label generation module 201 can therefore be used to implement the operation 122 described above.

On the basis of the initial training labels, a training set of data 202 is generated for use by the model training module 203 to generate the online classification module 204 (which model takes the form of a machine-learning model, as discussed in detail below). Thus, the training set of data 202 can be used in the implementation of the operation 123 described above.

The online classification module 204 can then be used to identify potentially sleeping cells based on further performance management (PM) data received from the network cells 200, thereby implementing operation 124 of the algorithm 120.

The output of the online classification module 204 can then be used by the rest of the system 190 to implement the operation 125 of the algorithm 120, as discussed in detail below.

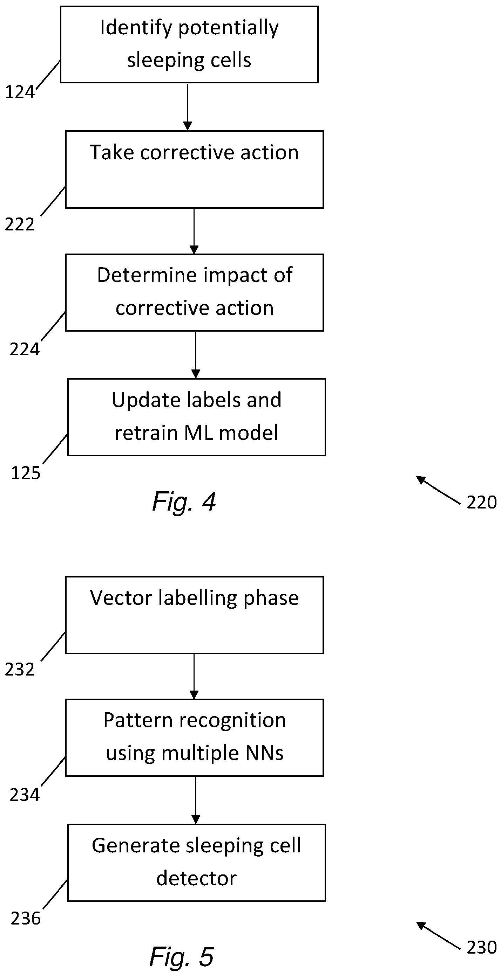

FIG. 4 is a flow chart showing an algorithm, indicated generally by the reference numeral 220, in accordance with an example embodiment. The algorithm 220, which may be implemented by the system 190, can be used to evolve the initial training set generated by the automatic label generation module 201 (and therefore improve the training of the online classification module 203).

The algorithm 220 starts with the operation 124 of the algorithm 120 described above in which a potentially sleeping cell is identified (e.g. based on an ML model trained in operation 123) based on initial training labels (obtained or generated in operation 122).

When a potentially sleeping cell is identified in the operation 124, the algorithm 220 moves to operation 222, where corrective action is taken. For example, a cell identified as a potentially sleeping cell may be restarted (e.g. under the control of the restart module 205 of the system 190). Note that no action is taken regarding a cell that is identified by the model as operating normally (i.e. not sleeping), as indicated by the no action module 206.

The algorithm 220 moves to operation 224, where the impact of the corrective action (or no correction action) taken in operation 222 is determined. For example, feedback from the network cells 200 can be analysed by the feedback module 207 of the system 190 to determine whether the prediction was correct, and this allows the ground truth label update module 208 to be updated with a ground truth label.

In an alternative embodiment, the impact of the corrective action may be carried out in operation 224 by performing a manual check (see the manual check module 209 of the system 190).

With the impact of the corrective action determined, the algorithm 220 moves to operation 125, where the labels of the training set 202 can be updated, enabling the machine learning module to be retrained, if desired.

The system 190 therefore provides an arrangement for sleeping cell detection based on a feedback loop that allows the continuous improvement and updating of the machine learning algorithm. In the algorithms 120 and 220, the training set 202 is continuously evolved, starting from a set that is generated (in operation 122), with no ground truth needed, and then by mixing the training set with new training examples that constitute the ground truth, as derived from a feedback from the network and the operators. The mixing strategy may rely on both an aging mechanism, by which the oldest labels of a cell are replaced by the newest labels, and a 'learning by errors' strategy, by which the label of a cell is replaced or confirmed thanks to the feedback from the network.

In practice, when a potentially sleeping cell is identified (e.g. in the operation 124), corrective action can be integrated in the network operation center 108, such that an appropriate reset command (using the reset module 205) can be sent to the suspected sleeping cell. In many circumstances, this is sufficient to recover the normal cell behaviour. Then after restart, the cell behaviour can be monitored and if normal behaviour is detected, the corresponding sleeping cell pattern can be labelled as truth set.

The reset in most cases results in repair of the malfunctioning in the networks. However, monitoring and verifying the correctness of the provided classification can be carried out by analyzing and checking the status of the cells after the reset. This feedback regarding the classification from the network contributes to enriching the ground truth set with trusted labels and it allows mixing of the automatic training set labels with the validated data.

As noted above, resetting is not the only way to obtain ground truth data, it is also possible obtain such data via manual checks (remotely or from the field, see the manual check module 209); this can be in addition to, or instead of, the reset method described above. By way of example, when a domain expert provides the ground truth derived from manual detection process, either remotely or in the field, the expert may provide one or more of: specific explicit label (sleeping), detection interval of relevant KPIs, reset time and in service time.

At the same time, the ground truth module 208 may also be updated with randomly chosen normal patterns in order to have a balanced training set.

Thus, it is possible to start the training and the classification described above even in the absence of any ground truth, as it is often the case in real world applications, and then to enhance the quality of the classification by keeping track of the monitoring output and of the feedback from the network.

In some example embodiments, prior to generating or obtaining training labels in the operation 122, the available performance management (PM) data coming from the network 106 are subjected to a data preparation step, in order, for example, to remove missing values and any possible outliers, remove seasonality and/or to normalize the data. The presence of missing values inside the data can cause the failure of the entire method. Moreover, raw data may show a periodic behavior due to the day/night cycle that is not relevant in the analysis, so the seasonality can be removed; and seasonality removal can be applied or not, depending on the type of KPI. The period of the seasonal component may be chosen as one day (e.g. where an hourly PM collection period is used). Finally, the data may be normalized in order to be able to compare different KPIs in different windows.

FIG. 5 is a flow chart showing an algorithm, indicated generally by the reference numeral 230, in accordance with an example embodiment. The algorithm 230 comprises a vector labelling phase 232, a pattern recognition phase 234 and a sleep cell detector generation phase 236.

The vector labelling phase 232 takes raw data (e.g. raw performance management data) as input and provides labelling for following sequential blocks of neural networks. Vector labels generated in the vector labelling phase 232 may be used as the training labels of the operation 122 described above.

The pattern recognition phase 234 uses pattern recognition to train a plurality of neutral networks, as described in detail below. Then, the sleeping cell detector generation phase 236 is used to generate a single machine-learning module that can be used as the online classification module 204 described above.

The performance management (PM) data comprises key performance indicators (KPIs). To better combine these KPIs, we create the so-called KPI couples (i.e. pairs of KPIs), created with the purpose of avoiding problems due to external causes that usually affects only a single KPI.

Sleeping cells may be identified by identification of a synchronous variation in more than one key performance indicators (KPIs) that form part of the performance management data described above (e.g. KPI couples). In order to generate the learning vectors for the training of successive blocks of neural networks (e.g. in the operation 234), it is possible to extract the training labels for each cell at a couple's level and the training labels for the cell classification. One of the advantages of using a structured algorithm for the extraction of the training labels is the possibility of building a layered architecture for the pattern recognition and the sleeping cell detection method. Indeed, without a structure able to identify the KPI couples mostly related to the sleeping behavior of a cell, it may not be possible to obtain clear labels for the KPI couples and therefore a clear distinction between two blocks of neural networks; otherwise, a global cell classification may have been the only possibility.

The vector labelling phase 232 comprises: a Principal Component Analysis (PCA) that selects pairs of KPIs (i.e. KPI couples) most responsible for the change of correlation structure among KPI couples; a first step selecting KPIs with highest PCA loadings over a given threshold; a correlation analysis that highlights time windows containing the most relevant changes; and a selection of the most relevant KPI couples in the relevant time windows provides a 0/1 classification of the couples. Couples classified with "1" may be kept and along with the detection window and the temporal position in the detection window constitute the labelled training vector; thus, the data labels discussed above are generated by combining the most relevant couples in the relevant windows.

The data provided as input of the vector labelling phase 232 are a subset of non-labelled cells coming from the network cells 200 that enter this step after data preparation. Even if this step is based on a time window analysis, the data are considered all together in the Principal Components Analysis, in order to extract the weights of the couples from a cumulative point of view. Then the cell information is taken into account in the correlation step, to obtain the detection of the most relevant windows, with a cell specific analysis. The output of this phase, i.e. the labeled couples in every window, is the input of the next phase.

From this point forward, the analysis proceeds window by window in such a way that all the windows, including the windows belonging to the same cell, are independent from each other and then the behavior of an adjacent window will not affect the classification of another.

In some example embodiments, the initial training labels may include time window samples, wherein labels of corresponding samples from different time windows are mapped to the same inputs of said neural network. A time window may include multiple samples that are all provided to a particular neural network, such that the neural network can examine temporal relationships.

The structure of multiple neural networks is built in order to recognize the KPI couples responsible for the sleeping behavior. The idea is to use a parallel structure of multiple Neural Networks (one for each KPI couple), with the purpose of analyzing each couple independently from the others and training a model that is able to recognize the sleeping patterns of each couple. The neural networks have the same structure, in terms of number of hidden layers, nodes and hyperparameters, in order to be able to combine and compare the results, to obtain a final classification.

The vector labelling phase 232 described above may include an activity of filtering of KPI couples to be included in the training set based on rules defined by domain Knowledge.

In fact, thanks to technical domain knowledge, it is possible to *a priori* inspect the meaning of the relation among the KPIs. In particular, before performing the training phase on the set of neural networks used in the operation 234, a check on a previously provided set of rules may be recommended, in order to avoid the use of particular training vectors responsible of describing a relation between two KPIs that shows a high correlation not related to sleeping behavior. For example, considering Block Error Rate and throughput KPIs, it is expected they have a negative correlation. If it is the case for a particular training vector, it may be necessary to remove it from the training set.

In some example embodiments the general method 232 only is used. In some example embodiments the application of the general method 232 is followed the training vector filtering procedure based on domain knowledge described above. Thus, patterns that are not related to sleeping cells may be removed from consideration.

The creation of a method based on neural networks implies the use of classified inputs to perform the training phase. On the other hand, it is the previous phase that automatically provides the label vectors for the neural networks. This implies that the method described so far is working in an unsupervised mode, since no trusted information is required for the achieving of the labeled output.

As already described, the input data for this second phase are the KPIs coming from the data preparation step and the KPI couples' labels coming from the vector labelling operation 232, combined together to gather the information of all the couples in the different windows. The output of those Neural Networks will be a continuous value between [0, 1] for every couple in every window.

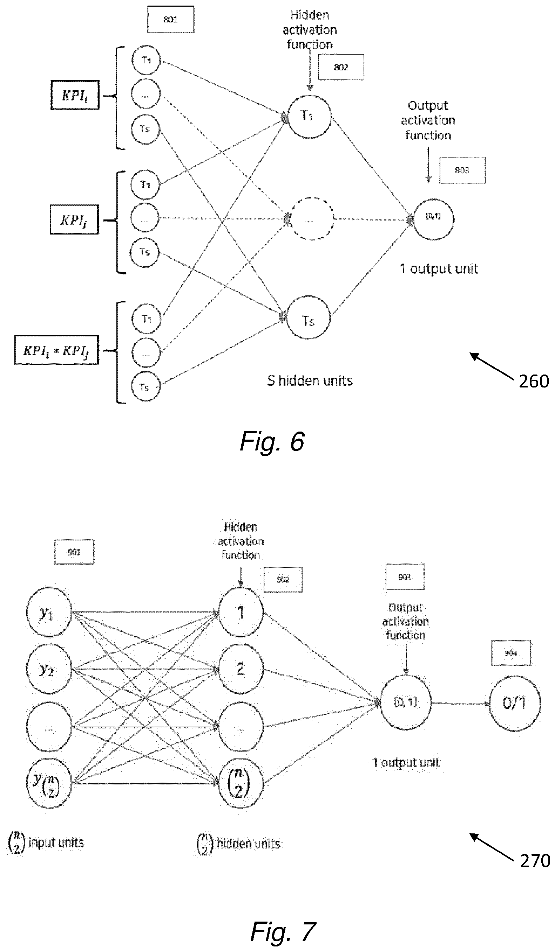

FIG. 6 is a block diagram of one of a plurality neural networks, indicated generally by the reference numeral 260, used in example embodiments. The neural network 260 may be used in the pattern recognition operation 234.

Each of a plurality of parallel neural networks used in the operation 234 is structurally the same, while each is trained on a specific KPI couple, in order to be specialized on those two particular KPIs and on their specific interactions. Indeed, here the number of neural networks is equal to the number of KPI couples, i.e. $\binom{n}{2}$ couples, if *n* is the number of available KPIs. It should be noticed that the $\binom{n}{2}$ neural networks are independent; they only share the KPIs. Each of these neural networks is trained with the same hyperparameters, in such a way that each couple maintains its own weight with respect to all the other couples, in terms of the relative importance that has been associated to a KPI couple on the others. The second phase of the architecture based on parallel neural networks is devoted to the detection and identification of the observed variables in terms of patterns, by looking at the couples' behavior highlighted by the vector generation phase and by generalizing them. The sleeping cell detector generation phase 236 uses a set of cells, whose labels come from the automatic label generator or from the trusted feedback from the network, to build a single neural network. This network is the effective sleeping cell detector, able to recognize the sleeping cells using the provided patterns and to provide the final classification. The neural network of the sleeping cell detector phase 236 consists of a single neural network which aggregates the outputs of the pattern recognition phase for each KPI couple and it defines when a certain set of KPI couples in a specific combination of patterns is responsible for the cell to be sleeping, by giving the 0/1 classification (normal or sleeping) for every window. A cell is then considered to be sleeping if it holds at least one sleeping window.

FIG. 7 is a block diagram of a neural network, indicated generally by the reference numeral 270, that may be used in the sleeping cell detector phase 236.

The neural network 270 used in the operation 236 may be trained with either automatically generated labels (e.g. the outputs of the automatic label generation module 201) or trusted labels (e.g. as updated by the ground truth label update module 208). The neural network 270 can be retrained when new (trusted) data are available, leaving the previous steps untouched. At the same time, the neural network 270 is able to perform the classification with automatic labelled data, allowing to obtain a final result without the need of trusted cells. Moreover, the neural network 270 can be trained with a mixed set of automatic labelled cells and trusted cells, a characteristic that allows to faster increase the accuracy during time, bringing trusted knowledge when available.

Thus, in the operation 236, the training operating is performed with the use of the evolving training set of classified windows and cell, i.e. only automatic labels, ground truth labels, or a mix of them.

The operation 236 may be based on a single neural network (e.g. the neural network 270) created in order to provide a classification of a single window. For this reason, the outputs of the $\binom{n}{2}$ parallel neural networks used in the operation 234 are combined together to obtain the information window by window. Then, the $\binom{n}{2}$ continuous values describing a single window are used as input for the neural network constructed in this phase.

The automatic labelled training set generated at step 232 is split into two subsets, the first used to train the neural networks at step 234 and the second used to train the sleeping cells detector at step 236, to avoid the overfitting of this second step. In order to perform the operation 236 on a second subset of cells, those new data do not enter the first phase for the vector labelling, but their value is obtained at the end of the test phase of the parallel neural networks and then is used, in combination with the window classification, to train this new single neural network.

The expected output of this layer is a final classification of the window and then, all the windows of a cell can be combined to obtain the cell classification based on the fact that a cell can be considered as sleeping if it has at least a window classified as sleeping.

Finally, the intrinsic non-linearity of a neural network is reflected in the capability of the system to catch some non-linear failure mechanisms. On the contrary, the linear Euclidean metric compared with a threshold applied on the correlation matrices in the vector generation phase would not have been able to detect those non-linear failures. In particular, the non-linear detector also recognizes the failures caused by the activation or the variation of particular subsets of KPIs, while a linear detector could only find a small variation of all the KPIs or a big variation of just one KPI.

The multi-layer structure of the algorithm allows to separately train each of the blocks and fully control them, in order to completely understand their output. In this perspective, it is suggested to train the parallel neural network used in the operation 234 and the neural network used in the operation 236 with different data, to be sure that the two learning phases are independent. This is particularly useful in the operation 234, when the automatic label mechanism may be responsible for both the training vectors of the multiple neural networks and of the last neural network.

The embodiments described above can be used with all phases in the network operation center 108 in order to provide a real-time observation of the network and a classification of the cells. Moreover, the described variants composed by a subset of phases can be used with the same purpose, in combination with other cell monitoring techniques. In both cases, the procedure for the detection of sleeping cells may require the user to provide a list of input values and data that can be based on operator domain knowledge or can be network specific.

In the following, some parameters that may be used as input of the method in some example embodiments are described. These values may be used for the construction of the method, together with the different training steps related to the neural networks. During the algorithm preparation, the size of the neural networks may be defined and stored in the model construction, and the parameters fixed. The idea is that the algorithm is prepared and trained at the beginning and then the user can proceed with the testing of the data or the user can create a flow that automatically analyzes the data available and classifies them using the presented method.

In order to obtain a method that is as accurate as possible, there are some criteria to evaluate how much the model is correctly performed, that may be taken into account during the building phase of the method, but are not needed for its use. In particular, the values of the accuracy, the sensitivity and the other values mainly obtained from the neural networks, can be used for the setup of the parameters, such as the number of iterations required both in the operation 234 and the operation 236. Even though they play a role in the model preparation, they are not available in the table below, since they depend on the choice of other parameters.

The parameters may include the following

    1. Input (general method): different subsets of cells (this comprises both cells with no sleeping/normal operation information associated and cells with validated label); number of KPIs (identification of KPIs for detection on which the analysis will be performed); size of the windows (a value set at the beginning of the algorithm, that must be unchanged for the entire method to guarantee the consistency); and the update rate for retraining (number of validated cells after which updating the training set and re-training the algorithm).

    2. Input (data preparation parameters): these parameters vary depending on the level of filtering the user wants, such as the minimal duration of a spike in the input signal. Other parameters as the periodicity for the seasonality filtering depends on PM update rate, target detection latency, data capture temporal width etc.

    3. Input (vector labelling - see operation 232): the inputs for this phase are the values required for the Principal Component Analysis, i.e. the number of principal components (to identify how many of them the user wants to use) and the threshold for the detection of the window(s); and the values for the computation of the correlation step, i.e. the threshold for the selection of the important KPIs and the number of couples to create and finally the values needed for the couples labelling.

    4. Input (pattern recognition using parallel neural networks - see operation 234): the parameters in use in this phase are mostly related to the construction of the neural networks. The neural networks are constructed to have the same input parameters, but different KPI values. The number of neural networks may depend on the number of available KPIs, set in the General Process described above. The other values that may be required are the number of units of each layer (input, hidden and output), the activation functions (for the hidden and output layer), cost function, some hyperparameters (batch size, learning rate) and the number of epochs (i.e. the number of iterations of the neural networks training).

    5. Input (generate sleeping cell detector - see operation 236): this phase has as input a list of KPIs available in the subset of data under inspection, in order to create a neural network able to analyse the subset. The values for the construction of the neural network are similar to the previous phase: the number of units of each layer (input, hidden and output), the activation functions (for the hidden and output layer), cost function, some hyperparameters (batch size, learning rate); the number of epochs (i.e. the number of iterations of the neural networks) and the binarization threshold required to obtain the final classification.

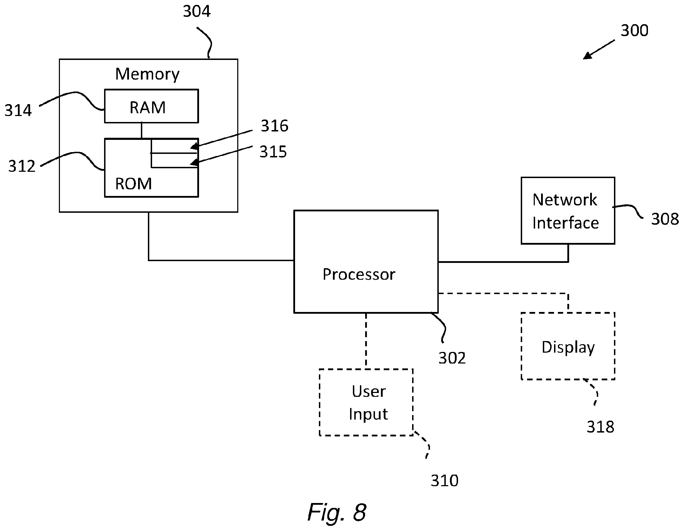

For completeness, FIG. 8 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/ apparatus, e.g. a modem which may be wired or wireless. The network/ apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 120, 220 and 230 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

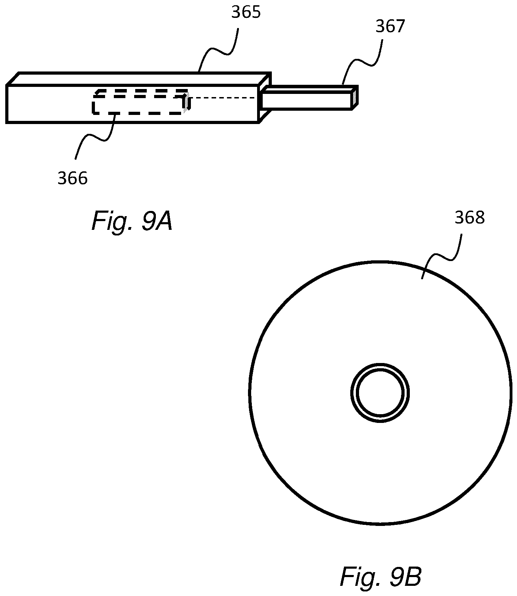

FIGS. 9A and 9B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. The CD 368 may be a CD-ROM or a DVD or similar. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/ apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 2, 3 and 5 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

## Claims

1. An apparatus comprising means for performing:

   obtaining (122) initial training labels for first performance management data of a mobile communication network (106), wherein the initial training labels are generated by a first classification model (201) to identify potentially sleeping cells of the mobile communication network (106);
   training (123) a machine-learning model (204) based on the initial training labels, wherein the model is configured to identify potentially sleeping cells within the mobile communication network;
   identifying (124) potentially sleeping cells using the trained machine-learning model based on second performance management data of the mobile communication network;
   receiving feedback (224) based on an impact of corrective action (222) taken based on the identification, by the machine-learning model, of said potentially sleeping cells;
   updating (125) said training labels based on said received feedback; and
   retraining (125) the machine-learning model based on the updated training labels

   wherein the means for obtaining initial training labels is further configured to perform:

   receiving said first performance management data from the mobile communication network (106); and
   generating said initial training labels from the received first performance management data using the first classification model.

2. An apparatus as claimed in claim 1, wherein the first classification model (201) is configured to generate said initial training labels by identifying changes in statistical association between pairs of performance management data points that are suggestive of potentially sleeping cells.

3. An apparatus as claimed in claim 2, wherein the first classification model (201) is configured to filter performance management data.

4. An apparatus as claimed in claim 2 or 3, wherein the initial training labels include time window samples, wherein labels of corresponding samples from different time windows are mapped to the same inputs of a neural network of said machine learning model.

5. An apparatus as claimed in any one of the preceding claims, wherein the retraining of the machine-learning model is periodic.

6. An apparatus as claimed in any one of the preceding claims, wherein said corrective action comprises restarting a cell of the mobile communication network identified as a potentially sleeping cell.

7. An apparatus as claimed in any one of the preceding claims, wherein the means are further configured to perform:
   determining whether a cell identified by said machine-learning model as a potentially sleeping cell was a sleeping cell based on the impact of said corrective action, wherein said feedback is based on said determination.

8. An apparatus as claimed in claim 7, wherein said means for determining whether a cell identified by said model as a potentially sleeping cell was a sleeping cell comprises a manual check or an automated check using network management tools.

9. An apparatus as claimed in any one of the preceding claims, wherein updating the training labels comprises updating said labels with ground truth labels.

10. An apparatus as claimed in any one of the preceding claims, wherein the machine-learning model (204) is organised according to a multiple interconnected hierarchical structure.

11. An apparatus as claimed in claim 10, wherein each layer of the hierarchical structure of the machine-learning model (204) is independently trainable.

12. An apparatus as claimed in any one of the preceding claims, wherein the means comprise:

    at least one processor; and
    at least one memory including computer program code, the at least one memory and the computer program configured, with the at least one processor, to cause the performance of the apparatus.

13. A method comprising:

    obtaining (122) initial training labels for first performance management data of a mobile communication network, wherein the initial training labels are generated by a first classification model to identify potentially sleeping cells of the mobile communication network;
    training (123) a machine-learning model based on the initial training labels, wherein the model is configured to identify potentially sleeping cells within the mobile communication network;
    identifying (124) potentially sleeping cells using the trained machine-learning model based on second performance management data of the mobile communication network;

receiving feedback (224) based on an impact of corrective action taken based on the identification, by the machine-learning model, of said potentially sleeping cells;

updating (125) said training labels based on said received feedback; and

retraining (125) the machine-learning model based on the updated training labels

wherein obtaining initial training labels comprises:

receiving said first performance management data from the mobile communication network (106); and

generating said initial training labels from the received first performance management data using the first classification model.

14. A computer program comprising instructions for causing an apparatus to perform at least the following:

obtaining initial training labels for first performance management data of a mobile communication network, wherein the initial training labels are generated by a first classification model to identify potentially sleeping cells of the mobile communication network;

training a machine-learning model based on the initial training labels, wherein the model is configured to identify potentially sleeping cells within the mobile communication network;

identifying potentially sleeping cells using the trained machine-learning model based on second performance management data of the mobile communication network;

receiving feedback based on an impact of corrective action taken based on the identification, by the machine-learning model, of said potentially sleeping cells;

updating said training labels based on said received feedback; and

retraining the machine-learning model based on the updated training labels wherein obtaining initial training labels comprises:

receiving said first performance management data from the mobile communication network (106); and

generating said initial training labels from the received first performance management data using the first classification model.

## Patentansprüche

1. Vorrichtung, die Mittel zum Durchführen von Folgendem umfasst:

Erhalten (122) von anfänglichen Trainingslabeln für erste Leistungsverwaltungsdaten eines mobilen Kommunikationsnetzwerks (106), wobei die anfänglichen Trainingslabel von einem ersten Klassifizierungsmodell (201) erzeugt werden, um potenziell ruhende Zellen des mobilen Kommunikationsnetzwerks (106) zu identifizieren;

Trainieren (123) eines Maschinenlernmodells (204) auf Basis der anfänglichen Trainingslabel, wobei das Modell dazu ausgelegt ist, potenziell ruhende Zellen im mobilen Kommunikationsnetzwerk zu identifizieren;

Identifizieren (124) von potenziell ruhenden Zellen unter Verwendung des trainierten Maschinenlernmodells auf Basis von zweiten Leistungsverwaltungsdaten des mobilen Kommunikationsnetzwerks;

Empfangen einer Rückmeldung (224) der potenziell ruhenden Zellen auf Basis einer Auswirkung einer Korrekturmaßnahme (222), die auf Basis der Identifikation vorgenommen wird, durch das Maschinenlernmodell;

Aktualisieren (125) der Trainingslabel auf Basis der empfangenen Rückmeldung; und

erneutes Trainieren (125) des Maschinenlernmodells auf Basis der aktualisierten Trainingslabel

wobei die Mittel zum Erhalten von anfänglichen Trainingslabeln ferner dazu ausgelegt sind, Folgendes durchzuführen:

Empfangen der ersten Leistungsverwaltungsdaten vom mobilen Kommunikationsnetzwerk (106); und

Erzeugen der anfänglichen Trainingslabel aus den empfangenen ersten Leistungsverwaltungsdaten unter Verwendung des Klassifizierungsmodells.

2. Vorrichtung nach Anspruch 1, wobei das erste Klassifizierungsmodell (201) dazu ausgelegt ist, die anfänglichen Trainingslabel durch Identifizieren von Änderungen einer statistischen Verknüpfung zwischen Paaren von Leistungsverwaltungsdatenpunkten, die auf potenziell ruhende Zellen hindeuten, zu erzeugen.

3. Vorrichtung nach Anspruch 2, wobei das erste Klassifizierungsmodell (201) dazu ausgelegt ist, Leistungsverwaltungsdaten zu filtern.

4. Vorrichtung nach Anspruch 2 oder 3, wobei die anfänglichen Trainingslabel Zeitfensterabtastungen beinhalten, wobei Label von entsprechenden Abtastungen von verschiedenen Zeitfenstern denselben Eingängen eines neuronalen Netzwerks des Maschinenlernmodells zugeordnet sind.

5. Vorrichtung nach einem der vorhergehenden Ansprüche, wobei das erneute Trainieren des Maschinenlernmodells periodisch erfolgt.

6. Vorrichtung nach einem der vorhergehenden Ansprüche, wobei die Korrekturmaßnahme ein erneutes Starten einer Zelle des mobilen Kommunikationsnetzwerks, die als eine potenziell ruhende Zelle identifiziert wurde, umfasst.

7. Vorrichtung nach einem der vorhergehenden Ansprüche, wobei die Mittel ferner dazu ausgelegt sind, Folgendes durchzuführen:
Bestimmen auf Basis der Auswirkung der Korrekturmaßnahme, ob eine Zelle, die vom Maschinenlernmodell als eine potenziell ruhende Zelle identifiziert wurde, eine ruhende Zelle war, wobei die Rückmeldung auf der Bestimmung basiert.

8. Vorrichtung nach Anspruch 7, wobei die Mittel zum Bestimmen, ob eine Zelle, die vom Modell als eine potenziell ruhende Zelle identifiziert wurde, eine ruhende Zelle war, eine manuelle Prüfung oder eine automatisierte Prüfung unter Verwendung von Netzwerkverwaltungstools umfasst.

9. Vorrichtung nach einem der vorhergehenden Ansprüche, wobei das Aktualisieren der Trainingslabel das Aktualisieren der Label mit Grundwahrheitslabeln umfasst.

10. Vorrichtung nach einem der vorhergehenden Ansprüche, wobei das Maschinenlernmodell (204) gemäß einer mehrfach verbundenen hierarchischen Struktur organisiert ist.

11. Vorrichtung nach Anspruch 10, wobei jede Schicht der hierarchischen Struktur des Maschinenlernmodells (204) unabhängig trainierbar ist.

12. Vorrichtung nach einem der vorhergehenden Ansprüche, wobei die Mittel Folgendes umfassen:

mindestens einen Prozessor; und
mindestens einen Speicher, der einen Computerprogrammcode beinhaltet, wobei der mindestens eine Speicher und das Computerprogramm dazu ausgelegt sind, mit dem mindestens einen Prozessor die Durchführung der Vorrichtung zu veranlassen.

13. Verfahren, das Folgendes umfasst:

Erhalten (122) von anfänglichen Trainingslabeln für erste Leistungsverwaltungsdaten eines mobilen Kommunikationsnetzwerks, wobei die anfänglichen Trainingslabel von einem ersten Klassifizierungsmodell erzeugt werden, um potenziell ruhende Zellen des mobilen Kommunikationsnetzwerks zu identifizieren;
Trainieren (123) eines Maschinenlernmodells auf Basis der anfänglichen Trainingslabel, wobei das Modell dazu ausgelegt ist, potenziell ruhende Zellen im mobilen Kommunikationsnetzwerk zu identifizieren;
Identifizieren (124) von potenziell ruhenden Zellen unter Verwendung des trainierten Maschinenlernmodells auf Basis von zweiten Leistungsverwaltungsdaten des mobilen Kommunikationsnetzwerks;
Empfangen einer Rückmeldung (224) der potenziell ruhenden Zellen auf Basis einer Auswirkung einer Korrekturmaßnahme, die auf Basis der Identifikation vorgenommen wird, durch das Maschinenlernmodell;
Aktualisieren (125) der Trainingslabel auf Basis der empfangenen Rückmeldung; und
erneutes Trainieren (125) des Maschinenlernmodells auf Basis der aktualisierten Trainingslabel
wobei das Erhalten von anfänglichen Trainingslabeln Folgendes umfasst:

Empfangen der ersten Leistungsverwaltungsdaten vom mobilen Kommunikationsnetzwerk (106); und
Erzeugen der anfänglichen Trainingslabel aus den empfangenen ersten Leistungsverwaltungsdaten unter Verwendung des Klassifizierungsmodells.

14. Computerprogramm, das Anweisungen zum Veranlassen einer Vorrichtung, mindestens Folgendes durchzuführen, umfasst:

Erhalten von anfänglichen Trainingslabeln für erste Leistungsverwaltungsdaten eines mobilen Kommunikationsnetzwerks, wobei die anfänglichen Trainingslabel von einem ersten Klassifizierungsmodell erzeugt werden, um potenziell ruhende Zellen des mobilen Kommunikationsnetzwerks zu identifizieren;
Trainieren eines Maschinenlernmodells auf Basis der anfänglichen Trainingslabel, wobei das Modell dazu ausgelegt ist, potenziell ruhende Zellen im mobilen Kommunikationsnetzwerk zu identifizieren;
Identifizieren von potenziell ruhenden Zellen unter Verwendung des trainierten Maschinenlernmodells auf Basis von zweiten Leistungsverwaltungsdaten des mobilen Kommunikationsnetzwerks;

Empfangen einer Rückmeldung der potenziell ruhenden Zellen auf Basis einer Auswirkung einer Korrekturmaßnahme, die auf Basis der Identifikation vorgenommen wird, durch das Maschinenlernmodell;

Aktualisieren der Trainingslabel auf Basis der empfangenen Rückmeldung; und

erneutes Trainieren des Maschinenlernmodells auf Basis der aktualisierten Trainingslabel, wobei das Erhalten von anfänglichen Trainingslabeln Folgendes umfasst:

> Empfangen der ersten Leistungsverwaltungsdaten vom mobilen Kommunikationsnetzwerk (106); und
>
> Erzeugen der anfänglichen Trainingslabel aus den empfangenen ersten Leistungsverwaltungsdaten unter Verwendung des Klassifizierungsmodells.

## Revendications

1. Appareil comprenant des moyens pour réaliser :

> l'obtention (122) d'étiquettes d'entraînement initiales pour des premières données de gestion des performances d'un réseau de communication mobile (106), dans lequel les étiquettes d'entraînement initiales sont générées par un premier modèle de classification (201) pour identifier des cellules potentiellement en sommeil du réseau de communication mobile (106) ;
>
> l'entraînement (123) d'un modèle d'apprentissage machine (204) sur la base des étiquettes d'entraînement initiales, dans lequel le modèle est configuré pour identifier des cellules potentiellement en sommeil au sein du réseau de communication mobile ;
>
> l'identification (124) de cellules potentiellement en sommeil en utilisant le modèle d'apprentissage machine entraîné sur la base de deuxièmes données de gestion des performances du réseau de communication mobile ;
>
> la réception d'une rétroaction (224) sur la base de l'effet d'une action corrective (222) prise sur la base de l'identification, par le modèle d'apprentissage machine, desdites cellules potentiellement en sommeil ;
>
> la mise à jour (125) desdites étiquettes d'entraînement sur la base de ladite rétroaction reçue ; et
>
> le réentraînement (125) du modèle d'apprentissage machine sur la base des étiquettes d'entraînement mises à jour
>
> dans lequel les moyens d'obtention d'étiquettes d'entraînement initiales sont en outre configurés pour réaliser :

> la réception desdites premières données de gestion des performances du réseau de communication mobile (106) ; et
>
> la génération desdites étiquettes d'entraînement initiales à partir des premières données de gestion des performances reçues en utilisant le premier modèle de classification.

2. Appareil selon la revendication 1, dans lequel le premier modèle de classification (201) est configuré pour générer lesdites étiquettes d'entraînement initiales en identifiant des changements dans l'association statistique entre des paires de points de données de gestion des performances qui sont évocateurs de cellules potentiellement en sommeil.

3. Appareil selon la revendication 2, dans lequel le premier modèle de classification (201) est configuré pour filtrer les données de gestion des performances.

4. Appareil selon la revendication 2 ou 3, dans lequel les étiquettes d'entraînement initiales comportent des échantillons de fenêtre temporelle, dans lequel des étiquettes d'échantillons correspondants provenant de différentes fenêtres temporelles sont mappées aux mêmes entrées d'un réseau neuronal dudit modèle d'apprentissage machine.

5. Appareil selon l'une des revendications précédentes, dans lequel le réentraînement du modèle d'apprentissage machine est périodique.

6. Appareil selon l'une des revendications précédentes, dans lequel ladite action corrective comprend le redémarrage d'une cellule du réseau de communication mobile identifiée comme une cellule potentiellement en sommeil.

7. Appareil selon l'une des revendications précédentes, dans lequel les moyens sont en outre configurés pour réaliser :
la détermination précisant si une cellule identifiée par ledit modèle d'apprentissage machine comme une cellule potentiellement en sommeil était une cellule en sommeil sur la base de l'effet de ladite action corrective, dans lequel ladite rétroaction est basée sur ladite détermination.

8. Appareil selon la revendication 7, dans lequel lesdits moyens pour déterminer si une cellule identifiée par ledit modèle comme une cellule potentiellement en sommeil était une cellule en sommeil comprennent une vérification manuelle ou une vérification automatisée à l'aide d'outils de gestion de réseau.

**9.** Appareil selon l'une des revendications précédentes, dans lequel la mise à jour les étiquettes d'entraînement comprend la mise à jour desdites étiquettes avec les étiquettes de la vérité de terrain.

**10.** Appareil selon l'une des revendications précédentes, dans lequel le modèle d'apprentissage machine (204) est organisé selon une structure hiérarchique interconnectée multiple.

**11.** Appareil selon la revendication 10, dans lequel chaque couche de la structure hiérarchique du modèle d'apprentissage machine (204) peut être entraînée indépendamment.

**12.** Appareil selon l'une des revendications précédentes, dans lequel les moyens comprennent :

au moins un processeur ; et
au moins une mémoire comportant un code de programme informatique, l'au moins une mémoire et le programme informatique étant configurés, avec l'au moins un processeur, pour provoquer la performance de l'appareil.

**13.** Procédé comprenant :

l'obtention (122) d'étiquettes d'entraînement initiales pour des premières données de gestion des performances d'un réseau de communication mobile, dans lequel les étiquettes d'entraînement initiales sont générées par un premier modèle de classification pour identifier des cellules potentiellement en sommeil du réseau de communication mobile ;
l'entraînement (123) d'un modèle d'apprentissage machine sur la base des étiquettes d'entraînement initiales, dans lequel le modèle est configuré pour identifier des cellules potentiellement en sommeil au sein du réseau de communication mobile ;
l'identification (124) de cellules potentiellement en sommeil en utilisant le modèle d'apprentissage machine entraîné sur la base de deuxièmes données de gestion des performances du réseau de communication mobile ;
la réception rétroaction (224) sur la base de l'effet d'une action corrective prise sur la base de l'identification, par le modèle d'apprentissage machine, desdites cellules potentiellement en sommeil ;
la mise à jour (125) desdites étiquettes d'entraînement sur la base de ladite rétroaction reçue ; et
le réentraînement (125) du modèle d'apprentissage machine sur la base des étiquettes d'entraînement mises à jour
dans lequel l'obtention des étiquettes d'entraînement initiales comprend :

la réception desdites premières données de gestion des performances du réseau de communication mobile (106) ; et
la génération desdites étiquettes d'entraînement initiales à partir des premières données de gestion des performances reçues en utilisant le premier modèle de classification.

**14.** Programme informatique comprenant des instructions pour amener un appareil à réaliser au moins ce qui suit :

l'obtention d'étiquettes d'entraînement initiales pour des premières données de gestion des performances d'un réseau de communication mobile, dans lequel les étiquettes d'entraînement initiales sont générées par un premier modèle de classification pour identifier des cellules potentiellement en sommeil du réseau de communication mobile ;
l'entraînement d'un modèle d'apprentissage machine sur la base des étiquettes d'entraînement initiales, dans lequel le modèle est configuré pour identifier des cellules potentiellement en sommeil au sein du réseau de communication mobile ;
l'identification de cellules potentiellement en sommeil en utilisant le modèle d'apprentissage machine entraîné sur la base de deuxièmes données de gestion des performances du réseau de communication mobile ;
la réception d'une rétroaction sur la base de l'effet d'une action corrective prise sur la base de l'identification, par le modèle d'apprentissage machine, desdites cellules potentiellement en sommeil ;
la mise à jour desdites étiquettes d'entraînement sur la base de ladite rétroaction reçue ; et
le réentraînement du modèle d'apprentissage machine sur la base des étiquettes d'entraînement mises à jour,
dans lequel l'obtention étiquettes d'entraînement initiales comprend :

la réception desdites premières données de gestion des performances du réseau de communication mobile (106) ; et
la génération desdites étiquettes d'entraînement initiales à partir des premières données de gestion des performances reçues en utilisant le premier modèle de classification.

*Fig. 1*

*Fig. 2*

*Fig. 3*

Identify potentially
sleeping cells

124

Take corrective action

222

Determine impact of
corrective action

224

Update labels and
retrain ML model

125

*Fig. 4*

220

Vector labelling phase

232

Pattern recognition
using multiple NNs

234

Generate sleeping cell
detector

236

*Fig. 5*

230

Fig. 6

Fig. 7

*Fig. 8*

*Fig. 9A*

*Fig. 9B*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020O64094 A